# EUROPEAN PATENT APPLICATION

(11) **EP 4 654 006 A1**
(43) Date of publication of application: **26.11.2025**
(21) Application number: 23917301.6
(22) Date of filing: 20.12.2023
(51) Int. Cl.: G06F 8/656

(54) **OTA UPGRADE METHOD AND STORAGE MEDIUM**

(30) Priority: 19.01.2023 CN 202310078835
(71) Applicant: Seres Automobile Co., Ltd, Chongqing 400000 (CN)
(72) Inventor: DENG, Xun, Chongqing 401135 (CN); NI, Zhi, Chongqing 401135 (CN); LIU, Yuanyuan, Chongqing 401135 (CN); XU, Lin, Chongqing 401135 (CN)
(74) Representative: Schulz Junghans Patentanwälte PartGmbB
(86) International application number: PCT/CN2023/140051
(87) International publication number: WO 2024/152834

(57) **Abstract**

Provided are an OTA upgrade method and a storage medium. The method includes: determining, by a vehicle gateway in response to a segmented flashing instruction, at least one flashing logical address corresponding to the segmented flashing instruction; determining, by the vehicle gateway according to the at least one flashing logical address and a pre-configured address network segment mapping table, a flashing network segment corresponding to each flashing logical address, and forwarding the segmented flashing instruction to each flashing network segment; disabling, for each flashing network segment, a communication corresponding to the flashing network segment when the flashing network segment receives the segmented flashing instruction; performing flashing by each to-be-flashed controller in the flashing network segment in response to the segmented flashing instruction; and enabling, by the flashing network segment, the communication corresponding to the flashing network segment in a case that each to-be-flashed controller is flashed.

## Description

This application claims priority to Chinese Patent Application No. 202310078835.8, filed on January 19, 2023 in China National Intellectual Property Administration, which is hereby incorporated by reference in its entirety.

### FIELD

The present application relates to the technical field of automotive electronic systems, for example, to an OTA upgrade method and a storage medium.

### BACKGROUND

A vehicle control unit integrates an over-the-air technology (OTA) manager to flash other controller software of a vehicle through a unified diagnostic services (UDS) diagnosis protocol, thereby realizing software upgrade of the vehicle control unit.

However, in an entire OTA software flashing process, a vehicle communication is in a disabled state. As a result, the vehicle cannot bring more functional experience to users in an entire OTA upgrade process, and user experience is poor.

### SUMMARY

In view of the foregoing defects or shortcomings in the existing technology, the present application aims to provide an Over-the-Air Technology (OTA) upgrade method and a storage medium, to resolve the problem that other functions cannot be used due to disabling of communication network segments in an OTA upgrade process.

Some embodiments of the present application provide an OTA upgrade method, including: determining, by a vehicle gateway in response to a segmented flashing instruction, at least one flashing logical address corresponding to the segmented flashing instruction;
determining, by the vehicle gateway according to the at least one flashing logical address and a pre-configured address network segment mapping table, a flashing network segment corresponding to each flashing logical address, and forwarding the segmented flashing instruction to each flashing network segment;
disabling, for each flashing network segment, a communication corresponding to the flashing network segment when the flashing network segment receives the segmented flashing instruction;
performing flashing by each to-be-flashed controller in the flashing network segment in response to the segmented flashing instruction; and
enabling, by the flashing network segment, the communication corresponding to the flashing network segment in a case that each to-be-flashed controllers is flashed.

In some embodiments, before the determining, by a vehicle gateway in response to a segmented flashing instruction, at least one flashing logical address corresponding to the segmented flashing instruction, the method further includes:
sending, by a vehicle control unit, the segmented flashing instruction to the vehicle gateway through an Ethernet flashing protocol.
where the determining, by a vehicle gateway in response to a segmented flashing instruction, at least one flashing logical address corresponding to the segmented flashing instruction includes:
   parsing, by the vehicle gateway in response to the segmented flashing instruction, the segmented flashing instruction according to the Ethernet flashing protocol, and determining at least one flashing logical address carried in the segmented flashing instruction.

In some embodiments, the to-be-flashed controller is a dual-area controller. After the performing flashing by each to-be-flashed controller in the flashing network segment in response to the segmented flashing instruction, the method further includes:
determining, by the dual-area controller in response to an area exchange-or-not instruction, an area exchange operation of the dual-area controller according to the area exchange-or-not instruction, where the area exchange-or-not instruction includes an area exchange block instruction and/or an area exchange execution instruction.

In some embodiments, the area exchange-or-not instruction includes an area exchange block instruction. The dual-area controller includes a first area and a second area. The first area is a running area, and the second area is a backup area not running. The dual-area controller further includes a running area flag bit and an area exchange block flag bit. The determining, by the dual-area controller in response to an area exchange-or-not instruction, an area exchange operation of the dual-area controller according to the area exchange-or-not instruction includes:
controlling, by the dual-area controller in response to the area exchange block instruction, the running area flag bit to correspond to the first area, and the area exchange block flag bit to be a truth value; and
determining, by the dual-area controller according to the running area flag bit and the area exchange block flag bit, that the area exchange operation of the dual-area controller is an area exchange and executing a program in the first area.

In some embodiments, the area exchange-or-not instruction includes an area exchange execution instruction. The dual-area controller includes a first area and a second area. The first area is a running area, and the second area is a backup area not running. The dual-area controller further includes a running area flag bit and an area exchange block flag bit. The determining, by the dual-area controller in response to an area exchange-or-not instruction, an area exchange operation of the dual-area controller according to the area exchange-or-not instruction includes:
controlling, by the dual-area controller in response to the area exchange execution instruction, the running area flag bit to correspond to the second area, and the area exchange block flag bit to remain unchanged; and
determining, by the dual-area controller according to the running area flag bit and the area exchange block flag bit, that the area exchange operation of the dual-area controller is executing a program in the second area.

In some embodiments, the method further includes:
initializing, by the dual-area controller, the running area flag bit, and controlling the running area flag bit to be the first area; and
initializing, by the dual-area controller, the area exchange block flag bit, and controlling the area exchange block flag bit to be a false value.

In some embodiments, the dual-area controller includes a first area and a second area. The first area is a running area, and the second area is a backup area not running. The dual-area controller further includes a running area flag bit and an area exchange block flag bit. After the determining an area exchange operation of the dual-area controller, the method further includes:
controlling, by the dual-area controller in response to a hardware reset instruction, the area exchange block flag bit to be a false value if the area exchange block flag bit is a truth value, controlling the running area flag bit to correspond to the first area, and executing a program in the first area; and
controlling the running area flag bit to correspond to the second area if the area exchange block flag bit is a false value, and executing a program in the second area.

In some embodiments, after the determining, by the dual-area controller in response to an area exchange-or-not instruction, an area exchange operation of the dual-area controller according to the area exchange-or-not instruction, the method further includes:
obtaining, by the dual-area controller, an execution result corresponding to the area exchange-or-not instruction, and feeding back the execution result to a vehicle control unit.

In some embodiments, the method further includes:
in a case that the at least one to-be-flashed controller is not flashed, enabling, for the to-be-flashed controller not flashed, a communication corresponding to the to-be-flashed controller not flashed, and returning to a step of the determining, by a vehicle gateway in response to a segmented flashing instruction, at least one flashing logical address corresponding to the segmented flashing instruction.

Some embodiments of the present application further provide a computer-readable storage medium. The computer-readable storage medium stores programs or instructions. The programs or instructions cause a computer to perform the steps of the OTA upgrade method in any embodiment.

In conclusion, the present application provides an OTA upgrade method. A vehicle gateway determines, in response to a segmented flashing instruction, at least one flashing logical address corresponding to the segmented flashing instruction. Then, the vehicle gateway determines, according to the at least one flashing logical address and a pre-configured address network segment mapping table, a flashing network segment corresponding to each flashing logical address, and forwards the segmented flashing instruction to each flashing network segment, whereby each flashing network segment can receive the segmented flashing instruction. For each flashing network segment, a communication corresponding to the flashing network segment is disabled when the flashing network segment receives the segmented flashing instruction, to achieve an effect of disabling as required. To-be-flashed controllers in the flashing network segment respond to the segmented flashing instruction and are flashed. The flashing network segment enables the communication corresponding to the flashing network segment in a case that the to-be-flashed controllers are flashed. There is no need to disable all communication network segments of a vehicle during OTA upgrade, thereby providing communication data support for other functions that do not need to be upgraded and improving user experience.

### BRIEF DESCRIPTION OF THE DRAWINGS

FIG. 1 is a flowchart of an OTA upgrade method according to some embodiments of the present application;
FIG. 2 is a schematic diagram of disabling as required according to some embodiments of the present application;
FIG. 3 is a flowchart of another OTA upgrade method according to some embodiments of the present application;
FIG. 4 is a schematic diagram of an implementation of an area exchange for a dual-area controller according to some embodiments of the present application; and
FIG. 5 is a flowchart of still another OTA upgrade method according to some embodiments of the present application.

### DETAILED DESCRIPTION

The present application will be described in further detail below with reference to the accompanying drawings and embodiments.

As mentioned in the background, in view of the problems in the traditional technology, the present application provides an Over-the-Air Technology (OTA) upgrade method, applicable to a case that a communication of a vehicle gateway is processed in an OTA upgrade process.

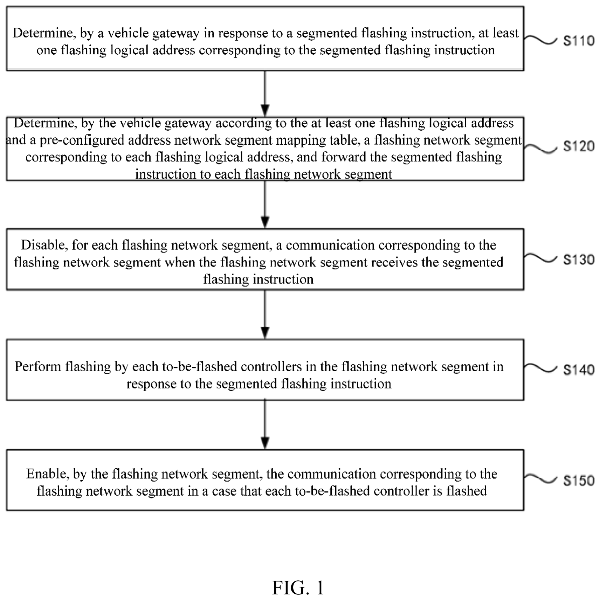

FIG. 1 is a flowchart of an OTA upgrade method according to some embodiments of the present application. Referring to FIG. 1, the OTA upgrade method includes:
S110: A vehicle gateway determines, in response to a segmented flashing instruction, at least one flashing logical address corresponding to the segmented flashing instruction.

The vehicle gateway may be a core component of an electronic and electrical architecture of a vehicle and is configured for information exchange between different electronic components of the vehicle. The segmented flashing instruction may be an instruction for flashing (including disabling) an electronic component involved in the upgrade at the time of OTA upgrade. The flashing logical address may be a logical address corresponding to the electronic component to be OTA upgraded. For example, the flashing logical address may be 2-byte data, and may be customized according to requirements.

When the vehicle gateway receives the segmented flashing instruction, the segmented flashing instruction may be responded and parsed, and a logical address corresponding to at least one electronic component to be OTA upgraded, namely at least one flashing logical address, is determined from the segmented flashing instruction.

In some embodiments, before the vehicle gateway determines, in response to a segmented flashing instruction, at least one flashing logical address corresponding to the segmented flashing instruction, a vehicle control unit may send the segmented flashing instruction to the vehicle gateway. For example:
The vehicle control unit sends the segmented flashing instruction to the vehicle gateway through an Ethernet flashing protocol.

The vehicle control unit may be an upper computer integrated with OTA flashing, for controlling various electronic components of the vehicle to realize various functions. The Ethernet flashing protocol (Diagnostic communication over Internet Protocol, DoIP) may be a diagnosis based on vehicle Ethernet, and diagnosis data transmitted is also based on unified diagnostic services (UDS). In some embodiments, DoIP is a transmission protocol for transmitting UDS diagnosis data on an Ethernet network.

The vehicle control unit sends the segmented flashing instruction to the vehicle gateway through the DoIP, whereby the vehicle gateway can respond to the segmented flashing instruction and realize effects of segmented disabling and subsequent flashing.

Correspondingly, the vehicle gateway may determine, in response to the segmented flashing instruction, the at least one flashing logical address corresponding to the segmented flashing instruction in following manners.

The vehicle gateway parses, in response to the segmented flashing instruction, the segmented flashing instruction according to the Ethernet flashing protocol, and determines the at least one flashing logical address carried in the segmented flashing instruction.

The vehicle gateway may respond to the segmented flashing instruction after receiving the segmented flashing instruction sent by the vehicle control unit, parse the segmented flashing instruction, and obtain the at least one flashing logical address carried in the segmented flashing instruction for subsequent segmented disabling and flashing.

S120: The vehicle gateway determines, according to the at least one flashing logical address and a pre-configured address network segment mapping table, a flashing network segment corresponding to each flashing logical address, and forwards the segmented flashing instruction to each flashing network segment.

The address network segment mapping table may be a mapping table pre-configured in the vehicle gateway for corresponding to the flashing logical address and the flashing network segment. The flashing network segment may be a controller area network (CAN) network segment or a CAN with flexible data-rate (CAN FD) network segment.

The address network segment mapping table may be pre-configured in the vehicle gateway. Then, in a case that the vehicle gateway receives at least one flashing logical address, the flashing logical address may be searched in the address network segment mapping table, to find a network segment corresponding to each flashing logical address, namely the flashing network segment. After the flashing network segments are determined, a segmented flashing instruction may be forwarded to each flashing network segment, whereby the flashing network segments stop communication.

S130: For each flashing network segment, a communication corresponding to the flashing network segment is disabled when the flashing network segment receives the segmented flashing instruction.

For each flashing network segment, when the flashing network segment receives the segmented flashing instruction, a communication of the flashing network segment may be disabled, to achieve an effect of disabling as required, for subsequent flashing and OTA upgrade.

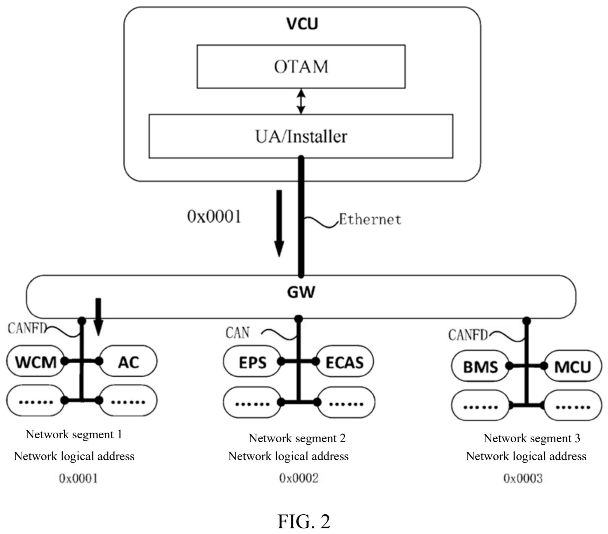

For example, a schematic diagram of disabling as required is as shown in FIG. 2. VCU is a vehicle control unit, which integrates an UA (update agent, OTA upgrade program) and an Installer (diagnostic flashing program), and leads OTA flashing. GW is a vehicle gateway, namely Gateway, responsible for communication protocol conversion and signal routing. OTAM is an OTA Manager, namely an OTA master control program. Ethernet is the Ethernet. WCM is a wireless charge module. AC is an air conditioner. EPS is electric power steering. ECAS is an electric control air suspension system. BMS is a battery management system. MCU is a motor control unit. It may be understood that other modules other than the electronic modules may be connected to each network segment. Details are not described herein again.

As shown in FIG. 2, a DoIP information parsing result is a logical address: 0x0001, namely the flashing logical address. The segmented flashing instruction is 28 83 03 (functional addressing disabled). The flashing network segment corresponding to the flashing logical address is network segment 1. Therefore, the segmented flashing instruction is sent to network segment 1.

S140: Each to-be-flashed controller in the flashing network segment responds to the segmented flashing instruction and performs flashing.

The to-be-flashed controller may be each controller to-be-flashed corresponding to the flashing network segment, and may be a single-area controller or a dual-area controller. In some embodiments, the segmented flashing instruction may be an instruction for triggering a program in the to-be-flashed controller to flash.

When receiving the segmented flashing instruction, each to-be-flashed controller in the flashing network segment performs flashing according to the segmented flashing instruction, to perform upgrade processing.

S150: The flashing network segment enables the communication corresponding to the flashing network segment in a case that each to-be-flashed controller is flashed.

If each to-be-flashed controllers is flashed, it indicates that the flashing is successful, and the communications of the flashing network segments may be restored. In some embodiments, the communication corresponding to the flashing network segment is enabled.

In some embodiments, in a case that the at least one to-be-flashed controller is not flashed, for the to-be-flashed controller not flashed, a communication corresponding to the to-be-flashed controller not flashed is enabled, and a step of determining, by the vehicle gateway in response to the segmented flashing instruction, at least one flashing logical address corresponding to the segmented flashing instruction is performed again.

If at least one to-be-flashed controller is not flashed, it is indicated that the flashing of a to-be-flashed controller fails. In this case, a communication corresponding to the to-be-flashed controller not flashed may be enabled. Then, the step of determining, by the vehicle gateway in response to a segmented flashing instruction, at least one flashing logical address corresponding to the segmented flashing instruction is performed again, to re-flash the to-be-flashed controller not flashed.

According to the OTA upgrade method provided in these embodiments of the present application, a vehicle gateway determines, in response to a segmented flashing instruction, at least one flashing logical address corresponding to the segmented flashing instruction. Then, the vehicle gateway determines, according to the at least one flashing logical address and a pre-configured address network segment mapping table, a flashing network segment corresponding to each flashing logical address, and forwards the segmented flashing instruction to each flashing network segment, whereby each flashing network segment can receive the segmented flashing instruction. For each flashing network segment, a communication corresponding to the flashing network segment is disabled when the flashing network segment receives the segmented flashing instruction, to achieve an effect of disabling as required. Each to-be-flashed controller in the flashing network segment responds to the segmented flashing instruction and performs flashing. The flashing network segment enables the communication corresponding to the flashing network segment in a case that the to-be-flashed controllers are flashed. There is no need to disable all communication network segments of a vehicle during OTA upgrade, thereby providing communication data support for other functions that do not need to be upgraded and improving user experience.

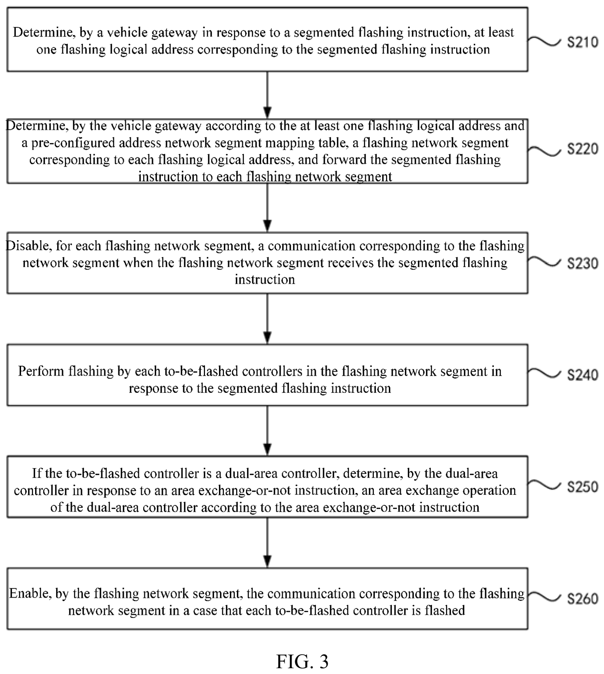

FIG. 3 is a flowchart of still another OTA upgrade method according to some embodiments of the present application. Based on the foregoing implementations, in a case that the to-be-flashed controller is a dual-area controller, a process of adding an area exchange-or-not instruction to the to-be-flashed controller and determining an area exchange operation based on the area exchange-or-not instruction is described by way of example. Referring to FIG. 3, the OTA upgrade method includes:
S210: A vehicle gateway determines, in response to a segmented flashing instruction, at least one flashing logical address corresponding to the segmented flashing instruction.
S220: The vehicle gateway determines, according to the at least one flashing logical address and a pre-configured address network segment mapping table, a flashing network segment corresponding to each flashing logical address, and forwards the segmented flashing instruction to each flashing network segment.
S230: For each flashing network segment, a communication corresponding to the flashing network segment is disabled when the flashing network segment receives the segmented flashing instruction.
S240: Each to-be-flashed controller in the flashing network segment responds to the segmented flashing instruction and performs flashing.
S250: If the to-be-flashed controller is a dual-area controller, the dual-area controller determines, in response to an area exchange-or-not instruction, an area exchange operation of the dual-area controller according to the area exchange-or-not instruction.

The dual-area controller typically includes a running area and a backup area. The area exchange-or-not instruction includes an area exchange block instruction and/or an area exchange execution instruction. The area exchange block instruction may be an instruction for blocking area exchange of the dual-area controller. The area exchange execution instruction may be an instruction for triggering an area exchange of the dual-area controller. The area exchange operation includes whether to exchange areas and a currently running area.

If the to-be-flashed controller is a dual-area controller, the dual-area controller may respond to, after receiving an area exchange-or-not instruction, the instruction, and then perform a corresponding area exchange operation on the dual-area controller according to the area exchange-or-not instruction.

In some embodiments, if the area exchange-or-not instruction includes an area exchange block instruction, the dual-area controller includes a first area and a second area. The first area is a running area, and the second area is a backup area not running. The dual-area controller further includes a running area flag bit and an area exchange block flag bit. The dual-area controller may determine, in response to an area exchange-or-not instruction, an area exchange operation of the dual-area controller according to the area exchange-or-not instruction in the following manners.

The dual-area controller controls, in response to the area exchange block instruction, the running area flag bit to correspond to the first area, and the area exchange block flag bit to be a truth value. The dual-area controller determines, according to the running area flag bit and the area exchange block flag bit, that the area exchange operation of the dual-area controller is a blocking area exchange and executing a program in the first area.

The running area flag bit may be a flag bit for indicating a currently running area. The area exchange block flag bit may be configured for indicating whether to block area exchange currently. The truth value, for example, True, indicates area exchange block. In some embodiments, the dual-area controller cannot autonomously exchange areas, but can perform the area exchange when receiving the area exchange execution instruction. The false value, for example, False, indicates area exchange. In some embodiments, the dual-area controller can autonomously exchange areas, and can perform area exchange when receiving the area exchange execution instruction.

When receiving the area exchange block instruction, the dual-area controller responds to the area exchange block instruction, sets the running area flag bit in the dual-area controller to be the first area, and sets the area exchange block flag bit to be the truth value. Then, the dual-area controller may determine, according to the running area flag bit and the area exchange block flag bit, that the area exchange is blocked currently and the currently running area is the first area. That is, the area exchange operation of the dual-area controller is blocking area exchange and executing a program in the first area.

For example, the running area flag bit in the dual-area controller is RunningArea, and the area exchange block flag bit is BlockExchange. After completing the flashing of the dual-area controller, the vehicle control unit sends a diagnostic routine of 31 01 DD 0F, namely the area exchange block instruction. After the dual-area controller makes a positive response, it is set that BlockExchange=True and RunningArea=first area.

In some embodiments, if the area exchange-or-not instruction includes an area exchange execution instruction, the dual-area controller includes a first area and a second area. The first area is a running area, and the second area is a backup area not running. The dual-area controller further includes a running area flag bit and an area exchange block flag bit. The dual-area controller may determine, in response to an area exchange-or-not instruction, an area exchange operation of the dual-area controller according to the area exchange-or-not instruction in the following manners.

The dual-area controller controls, in response to the area exchange execution instruction, the running area flag bit to correspond to the second area, and controls the area exchange block flag bit to remain unchanged. The dual-area controller determines, according to the running area flag bit and the area exchange block flag bit, that the area exchange operation of the dual-area controller is executing a program in the second area.

When receiving the area exchange execution instruction, the dual-area controller responds to the area exchange execution instruction, sets the running area flag bit in the dual-area controller to be the second area, and keeps the area exchange block flag bit unchanged. Then, the dual-area controller may determine, according to the running area flag bit and the area exchange block flag bit, that the currently running area is the second area. That is, the area exchange operation of the dual-area controller is executing a program in the second area.

For example, the running area flag bit in the dual-area controller is RunningArea, and the area exchange block flag bit is BlockExchange. The vehicle control unit sends a diagnostic routine of 31 01 DD 04 (area exchange execution instruction). After the dual-area controller makes a positive response, RunningArea is set to be the second area, and after restarting, the second area is entered to run the program.

In some embodiments, the running area flag bit and the area exchange block flag bit in the dual-area controller may be initialized. For example:
The dual-area controller initializes the running area flag bit, and controls the running area flag bit to be the first area. The dual-area controller initializes the area exchange block flag bit, and controls the area exchange block flag bit to be a false value.

Before the dual-area controller is flashed, the dual-area controller may be initialized. The running area flag bit is initialized into the first area, and the area exchange block flag bit is initialized into the false value.

In some embodiments, the dual-area controller includes a first area and a second area. The first area is a running area, and the second area is a backup area not running. The dual-area controller further includes a running area flag bit and an area exchange block flag bit. After determining an area exchange operation of the dual-area controller, a hardware reset operation may be performed. For example:
In response to a hardware reset instruction, if the area exchange block flag bit is a truth value, the dual-area controller controls, the area exchange block flag bit to be a false value, controls the running area flag bit to correspond to the first area, and executes a program in the first area. If the area exchange block flag bit is a false value, the running area flag bit is controlled to correspond to the second area, and a program in the second area is executed.

The hardware reset instruction may be an instruction for triggering the dual-area controller to perform a hardware reset.

When receiving a hardware reset instruction, the dual-area controller responds to the hardware reset instruction. In a case that the area exchange block flag bit is a truth value, the area exchange block flag bit is set to be a false value, the running area flag bit is set to be the first area, and the program in the first area is executed. In a case that the area exchange block flag bit is a false value, the running area flag bit is set to be the second area, and the program in the second area is executed.

For example, the running area flag bit in the dual-area controller is RunningArea, and the area exchange block flag bit is BlockExchange. The vehicle control unit sends 1101 (that is, hardware reset instruction) to the dual-area controller. After the dual-area controller responds to the hardware reset instruction, the dual-area controller determines whether BlockExchange is True. If BlockExchange is True, the first area is still entered to run the program, and BlockExchange is set to be False. If BlockExchange is False, the second area is entered to run the program.

In some embodiments, after the dual-area controller determines, in response to an area exchange-or-not instruction, an area exchange operation of the dual-area controller according to the area exchange-or-not instruction, an execution situation of the area exchange operation may be fed back to the vehicle control unit.

The dual-area controller obtains an execution result corresponding to the area exchange-or-not instruction, and feeds back the execution result to the vehicle control unit.

The execution result may be an identifier for indicating whether the area exchange-or-not instruction is executed successfully.

After responding to the area exchange-or-not instruction, the dual-area controller may determine a response result, namely an execution result corresponding to the area exchange-or-not instruction, and may then feed back the execution result to the vehicle control unit, whereby the vehicle control unit can perform subsequent operations.

S260: The flashing network segment enables the communication corresponding to the flashing network segment in a case that the to-be-flashed controllers are flashed.

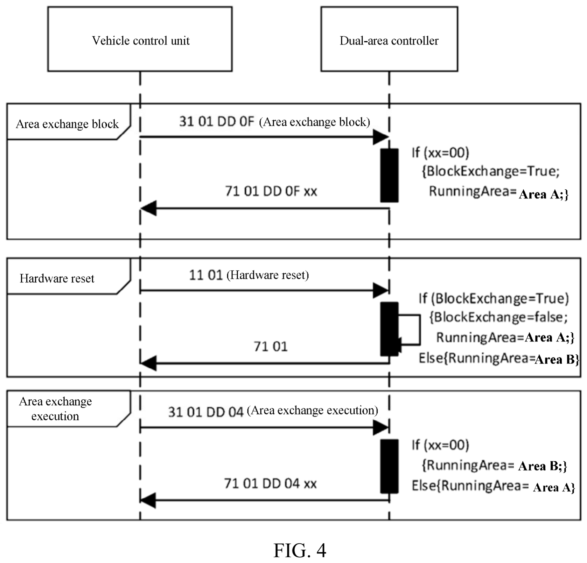

For example, a schematic diagram of an implementation of area exchange for a dual-area controller is shown in FIG. 4. In the dual-area controller, a running area flag bit is RunningArea, and an area exchange block flag bit is BlockExchange. A first area is denoted as area A, and a second area is denoted as area B. 31 01 DD 0F represents an area exchange block instruction. xx=00 represents receiving and executing a corresponding area exchange-or-not instruction. 71 01 DD 0F xx represents an execution result of the area exchange block instruction. 11 01 represents a hardware reset instruction. 71 01 represents an execution result of the hardware reset instruction. 31 01 DD 04 represents an area exchange execution instruction. 31 01 DD 04 xx represents an execution result of the area exchange execution instruction.

It may be understood that if a flashing error occurs, since the dual-area controller responds to the area exchange block instruction, it is ensured that a program in the first area still runs normally. There is no need to perform a rollback operation, but only a single-area controller needs to be rolled back, thereby greatly reducing complexity of OTA software version rollback and improving a success rate of version rollback.

According to the OTA upgrade method provided in these embodiments of the present application, if a to-be-flashed controller is a dual-area controller, the dual-area controller responds to an area exchange-or-not instruction and determines an area exchange operation of the dual-area controller according to the area exchange-or-not instruction, whereby a vehicle control unit actively controls the dual-area controller to exchange areas or not, thereby avoiding accidental area exchange of the dual-area controller, reducing complexity of OTA software version rollback, and improving a rollback success rate.

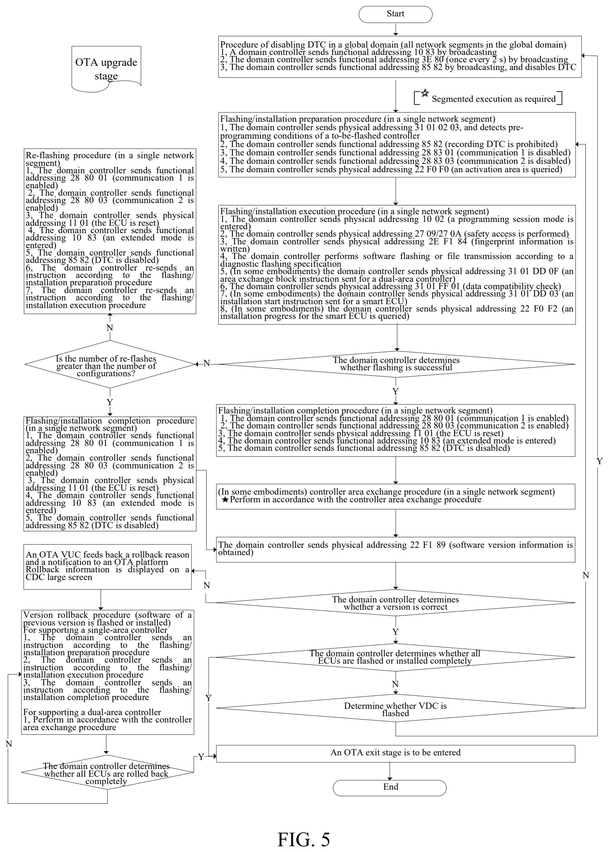

FIG. 5 is a flowchart of still another OTA upgrade method according to some embodiments of the present application. Referring to FIG. 5, the OTA upgrade method includes:
(1) In a procedure of disabling diagnostic trouble code (DTC) in a global domain, 1, a domain controller sends functional addressing 10 83 by broadcasting; 2, the domain controller sends functional addressing 3E 80 (once every 2 s) by broadcasting; and 3, the domain controller sends functional addressing 85 82 by broadcasting, and disables DTC. Subsequently, in response to a segmented flashing instruction, a flashing network segment is determined, for segmented execution as required.
(2) In a flashing/installation preparation procedure (in a single network segment, namely each flashing network segment), 1, the domain controller sends physical addressing 31 01 02 03, and detects pre-programming conditions of a to-be-flashed controller; 2, the domain controller sends functional addressing 85 82 (recording DTC is prohibited); 3, the domain controller sends functional addressing 28 83 01 (communication 1 is disabled); 4, the domain controller sends functional addressing 28 83 03 (communication 2 is disabled); and 5, the domain controller sends physical addressing 22 F0 F0 (an activation area is queried).
(3) In a flashing/installation execution procedure (in a single network segment), 1, the domain controller sends physical addressing 10 02 (a programming session mode is entered); 2, the domain controller sends physical addressing 27 09/27 0A (safety access is performed); 3, the domain controller sends physical addressing 2E F1 84 (fingerprint information is written); 4, the domain controller performs software flashing or file transmission according to a diagnostic flashing specification; 5, (in some embodiments, the condition is a dual-area controller) the domain controller sends physical addressing 31 01 DD 0F (an area exchange block instruction sent for the dual-area controller); 6, the domain controller sends physical addressing 31 01 FF 01 (data compatibility check); 7, (in some embodiments, the condition is a smart electronic control unit (ECU)) the domain controller sends physical addressing 31 01 DD 03 (an installation start instruction sent for the smart ECU); and 8, (in some embodiments, the condition is a smart ECU) the domain controller sends physical addressing 22 F0 F2 (an installation progress for the smart ECU is queried).
(4) The domain controller determines whether flashing is successful. If yes, (5) is performed. If no, (7) is performed.
(5) In a flashing/installation completion procedure (in a single network segment), 1, the domain controller sends functional addressing 28 80 01 (communication 1 is enabled); 2, the domain controller sends functional addressing 28 80 03 (communication 2 is enabled); 3, the domain controller sends physical addressing 11 01 (the ECU is reset); 4, the domain controller sends functional addressing 10 83 (an extended mode is entered); and 5, the domain controller sends functional addressing 85 82 (DTC is disabled). Then, (6) or (10) may be performed.
(6) A controller area exchange procedure (in a single network segment) is performed in accordance with a dual-area controller area exchange procedure, namely in response to an area exchange execution instruction. It may be understood that (6) may be performed after (5) or after (12). If (6) is performed after (5), (10) is performed after (6). If (6) is performed after (12), (6) is performed after the determining result is yes, and (17) is performed.
(7) Whether the number of re-flashes is greater than the number of configurations is determined. If no, (8) is performed. If yes, (9) is performed.
(8) In a re-flashing procedure (in a single network segment), 1, the domain controller sends functional addressing 28 80 01 (communication 1 is enabled); 2, the domain controller sends functional addressing 28 80 03 (communication 2 is enabled); 3, the domain controller sends physical addressing 11 01 (the ECU is reset); 4, the domain controller sends functional addressing 10 83 (an extended mode is entered); 5, the domain controller sends functional addressing 85 82 (DTC is disabled); 6, the domain controller re-sends an instruction according to the flashing/installation preparation procedure; and 7, the domain controller re-sends an instruction according to the flashing/installation execution procedure.
(9) In a flashing/installation completion procedure (in a single network segment), 1, the domain controller sends functional addressing 28 80 01 (communication 1 is enabled); 2, the domain controller sends functional addressing 28 80 03 (communication 2 is enabled); 3, the domain controller sends physical addressing 11 01 (the ECU is reset); 4, the domain controller sends functional addressing 10 83 (an extended mode is entered); and 5, the domain controller sends functional addressing 85 82 (DTC is disabled). Then, (10) is performed.
(10) The domain controller sends physical addressing 22 F1 89 (software version information is obtained).
(11) The domain controller determines whether a version is correct. If yes, (12) is performed. If no, (13) is performed.
(12) The domain controller determines whether ECUs are flashed or installed completely. If yes, (17) is performed, or (6) and (17) are performed in sequence. If no, (16) is performed.
(13) An OTA Manager (vehicle upgrade controller) feeds back a rollback reason and a notification to an OTA platform, and displays rollback information on a large screen. (14) is performed.
(14) In a version rollback procedure (software of a previous version is flashed or installed), for supporting a single-area controller, 1, the domain controller sends an instruction according to the flashing/installation preparation procedure; 2, the domain controller sends an instruction according to the flashing/installation execution procedure; and 3, the domain controller sends an instruction according to the flashing/installation completion procedure. For supporting a dual-area controller, 1, the version rollback procedure is performed in accordance with the controller area exchange procedure. Then, (15) is performed.
(15) The domain controller determines whether ECUs are rolled back completely. If yes, (17) is performed. If no, (14) is performed again.
(16) Whether VDC is flashed is determined. If yes, (1) is performed again. If no, (2) is performed again.
(17) An OTA exit stage is to be entered.

According to the OTA upgrade method provided in these embodiments of the present application, based on an OTA flashing procedure, a policy of disabling as required is added. In an OTA upgrade process, there is no need to disable communications of all network segments of a vehicle, to provide a communication basis for upgrade functions, thereby bringing a better OTA upgrade experience to users. Moreover, based on the OTA flashing procedure, policies of area exchange block and area exchange execution are added. A vehicle control unit leads a dual-area controller to exchange areas, thereby avoiding accidental area exchange of the dual-area controller. In addition, complexity of OTA software version rollback can be reduced, and a success rate of version rollback can be improved.

In addition to the foregoing method, some embodiments of the present application may further be a computer program product, including computer program instructions. The computer program instructions, when run by a processor, cause the processor to perform the steps of the OTA upgrade method according to any embodiment of the present application.

The computer program product may write program code for performing the operations of these embodiments of the present application in any combination of one or more programming languages. The programming languages include object-oriented programming languages such as Java and C++, as well as conventional procedural programming languages such as a "C" language or similar programming languages. The program code may be executed entirely on a user computing device, partially on user equipment, as a stand-alone software package, partially on the user computing device and partially on a remote computing device, or entirely on the remote computing device or a server.

In addition, some embodiments of the present application may be a computer-readable storage medium having computer program instructions stored therein. The computer program instructions, when run by a processor, cause the processor to perform the steps of the OTA upgrade method according to any embodiment of the present application.

The computer-readable storage medium may be any combination of one or more readable media. The readable medium may be a readable signal medium or a readable storage medium. The readable storage medium may include, for example, but is not limited to, an electrical, magnetic, optical, electromagnetic, infrared, or semiconductor system, apparatus, or device, or any combination of the foregoing. Examples of the readable storage medium (a non-exhaustive list) include an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

The principles and implementations of the present application in this specification are described using individual examples, and the description of the foregoing embodiments is for helping to understand the methods and core ideas of the present application. The above is an optional implementation of the present application. It should be noted that due to the limitation of text expression, there are objectively infinite structures. For a person of ordinary skill in the art, some modifications, retouches, or changes may be made and the foregoing technical features may be combined in an appropriate manner without departing from the principles of the present application. These modifications, retouches, changes, or combinations, or directly applying the concepts and technical solutions of the disclosure to other occasions without improvement, should be regarded as the scope of protection of the present application.

## Claims

1. An Over-the-Air Technology (OTA) upgrade method, comprising:
determining, by a vehicle gateway in response to a segmented flashing instruction, at least one flashing logical address corresponding to the segmented flashing instruction;
determining, by the vehicle gateway according to the at least one flashing logical address and a pre-configured address network segment mapping table, a flashing network segment corresponding to each flashing logical address, and forwarding the segmented flashing instruction to each flashing network segment;
disabling, for each flashing network segment, a communication corresponding to the flashing network segment when the flashing network segment receives the segmented flashing instruction;
performing flashing by each to-be-flashed controller in the flashing network segment in response to the segmented flashing instruction; and
enabling, by the flashing network segment, the communication corresponding to the flashing network segment in a case that each to-be-flashed controller is flashed.

2. The method according to claim 1, wherein before the determining, by a vehicle gateway in response to a segmented flashing instruction, at least one flashing logical address corresponding to the segmented flashing instruction, the method further comprises:
sending, by a vehicle control unit, the segmented flashing instruction to the vehicle gateway through an Ethernet flashing protocol;
correspondingly, the determining, by a vehicle gateway in response to a segmented flashing instruction, at least one flashing logical address corresponding to the segmented flashing instruction comprises:
parsing, by the vehicle gateway in response to the segmented flashing instruction, the segmented flashing instruction according to the Ethernet flashing protocol, and determining at least one flashing logical address carried in the segmented flashing instruction.

3. The method according to claim 1, wherein the to-be-flashed controller is a dual-area controller, and after the performing flashing by each to-be-flashed controller in the flashing network segment in response to the segmented flashing instruction, the method further comprises:
determining, by the dual-area controller in response to an area exchange-or-not instruction, an area exchange operation of the dual-area controller according to the area exchange-or-not instruction, wherein the area exchange-or-not instruction comprises an area exchange block instruction and/or an area exchange execution instruction.

4. The method according to claim 3, wherein the area exchange-or-not instruction comprises an area exchange block instruction, the dual-area controller comprises a first area and a second area, the first area is a running area, the second area is a backup area not running, the dual-area controller further comprises a running area flag bit and an area exchange block flag bit, and the determining, by the dual-area controller in response to an area exchange-or-not instruction, an area exchange operation of the dual-area controller according to the area exchange-or-not instruction comprises:
controlling, by the dual-area controller in response to the area exchange block instruction, the running area flag bit to correspond to the first area, and the area exchange block flag bit to be a truth value; and
determining, by the dual-area controller according to the running area flag bit and the area exchange block flag bit, that the area exchange operation of the dual-area controller is an area exchange and executing a program in the first area.

5. The method according to claim 3, wherein the area exchange-or-not instruction comprises an area exchange execution instruction, the dual-area controller comprises a first area and a second area, the first area is a running area, the second area is a backup area not running, the dual-area controller further comprises a running area flag bit and an area exchange block flag bit, and the determining, by the dual-area controller in response to an area exchange-or-not instruction, an area exchange operation of the dual-area controller according to the area exchange-or-not instruction comprises:
controlling, by the dual-area controller in response to the area exchange execution instruction, the running area flag bit to correspond to the second area, and the area exchange block flag bit to remain unchanged; and
determining, by the dual-area controller according to the running area flag bit and the area exchange block flag bit, that the area exchange operation of the dual-area controller is executing a program in the second area.

6. The method according to claim 4 or 5, further comprising:
initializing, by the dual-area controller, the running area flag bit, and controlling the running area flag bit to be the first area; and
initializing, by the dual-area controller, the area exchange block flag bit, and controlling the area exchange block flag bit to be a false value.

7. The method according to claim 3, wherein the dual-area controller comprises a first area and a second area, the first area is a running area, the second area is a backup area not running, the dual-area controller further comprises a running area flag bit and an area exchange block flag bit, and after the determining an area exchange operation of the dual-area controller, the method further comprises:
controlling, by the dual-area controller in response to a hardware reset instruction, the area exchange block flag bit to be a false value if the area exchange block flag bit is a truth value, controlling the running area flag bit to correspond to the first area, and executing a program in the first area; and
controlling the running area flag bit to correspond to the second area if the area exchange block flag bit is a false value, and executing a program in the second area.

8. The method according to claim 3, wherein after the determining, by the dual-area controller in response to an area exchange-or-not instruction, an area exchange operation of the dual-area controller according to the area exchange-or-not instruction, the method further comprises:
obtaining, by the dual-area controller, an execution result corresponding to the area exchange-or-not instruction, and feeding back the execution result to a vehicle control unit.

9. The method according to claim 1, further comprising:
in a case that the at least one to-be-flashed controller is not flashed, enabling, for the to-be-flashed controller not flashed, a communication corresponding to the to-be-flashed controller not flashed, and returning to a step of the determining, by a vehicle gateway in response to a segmented flashing instruction, at least one flashing logical address corresponding to the segmented flashing instruction.

10. A computer-readable storage medium, storing programs or instructions, the programs or instructions causing a computer to perform steps of the OTA upgrade method according to any one of claims 1 to 9.
